# NEW EUROPEAN PATENT SPECIFICATION

(11) **EP 0 721 901 B2**
(45) Date of publication and mention of the opposition decision: **02.05.2007**
(45) Mention of the grant of the patent: 10.03.1999
(21) Application number: 96200038.6
(22) Date of filing: 15.01.1996
(51) Int. Cl.: B65G 25/06, B60P 1/00

(54) **Loading floor for lorries or trailers**
Lastkraftwagen oder Anhänger mit Ladefläche
Camions ou remorques avec plateforme de chargement

(30) Priority: 13.01.1995 NL 9500067
(43) Date of publication of application: 17.07.1996
(73) Proprietor: Cargomac B.V., 7333 NP Apeldoorn (NL)
(72) Inventor: De Vos, Wim, NL-7326 JW Apeldoorn (NL); Nijhof, Dick, NL-7783 EK Gramsbergen (NL)
(74) Representative: Ferguson, Alexander

(56) References cited:
- EP-A- 0 555 916
- US-A- 5 263 573
- US-A- 5 350 054
- US-A- 5 390 781
- Hyva drawings "Moving Floor Assembly", dated 14.06.1984 with pictures 9990-5 and 9990-8.
- HALLCO 2000 Series Conveyor, Installation Instructions, p. 12-15.

## Description

The invention relates to a loading floor for lorries or trailers, constituted essentially by at least three groups of slats, which can be shifted separately and in succession in one direction by means of suitable driving means over a determined stroke and can be moved jointly over the same stroke in the returning direction.

A first example of such a loading floor is the floor according to US patent 4,144,963. The loading floor comprises two main beams arranged on both longitudinal sides of the lorry or trailer, the main beams being connected to each other by a plurality of cross beams spaced at regular longitudinal distances. To support the slats of the loading floor, transversely placed bearing girders are provided at a level higher than the cross beams, which bearing girders are attached with their ends to the sides of the main beams. In a plurality of successive interspaces between successive bearing girders, transversely extending driving feet are located, connected at their upper end to an associated series of transversely mutually spaced slats. The driving feet are hingeably connected at the bottom side to one end of an associated piston rod, of which the other end is provided with a piston which is received in an associated cylinder, which is hingeably connected with its end turned away from the piston rod to one of the above-mentioned cross beams. The cylinder/piston/piston rod assemblies are herein located at a level considerably below the loading surface.

US patent specification 4,184,587 discloses another example of a loading floor of the type mentioned in the preamble. The driving apparatus of this loading floor is realized as a modular built-in unit. The modular built-in unit therein consists of a pair of longitudinal beams, and a plurality of transversely extending bearing girders superpositioned and attached thereon, which bearing girders form part of transverse frame lattices, for support of the slats which are reciprocable over them. The transversely extending driving feet which are each connected to a group of slats are jointly reciprocable within a space limited in longitudinal direction by two successive bearing girders. The driving feet are each stiffly attached to associated driving rods in a manner shifted in longitudinal direction of the loading space, the driving rods being slidably suspended on their free end on the bottom side of a bearing girder and being hingeably connected on their other end to an end of a piston rod, which is received with its piston end in the cylinder, which cylinder is hingeably attached with its end turned away from the piston rod to the bottom side of a next bearing girder.

The known modular built-in unit is built into a loading floor by means of angle sections, which are on the one hand attached to the longitudinal beams and on the other hand to the longitudinal floor beams situated on the sides of the loading floor of a trailer. These longitudinal floor beams herein come to lie adjacent to the modular built-in unit, at the same height as the longitudinal beams and the bearing girders supported thereon.

European patent application 0,085,735 discloses a further development of the loading floor discussed above, wherein the modular built-in unit in which the driving apparatus is included comprises two transverse frame lattices, situated on both sides of the space in which the driving feet are reciprocated, as well as a pair of diagonal connecting girders meeting in the centre of the unit, the cylinders being hingeably attached to the corner area where the diagonal girders meet and being hingeably connected with their piston rods to the tubular driving rods, which are slidably supported within guide bearings, accommodated in the above-mentioned transverse frame lattices. The transverse frame lattices have upper bearing girders, which provide support to the reciprocable slats of the loading floor. The above-mentioned guide bearings for the driving tubes are attached to the bottom side of these bearing girders. The corner area to which the cylinders are attached is located at a lower level than the driving tubes. Consequently, the centre lines of cylinders are inclined at an angle relative to the horizontal, the purpose of which is to achieve that vertical forces can be exerted on the connection piston rod / driving tube.

A comparable driving apparatus, realized as modular built-in unit, is known from European patent application 0,085,736: This one is especially suitable to be built in between two main beams of the chassis of the lorry, when these extend at a distance from the sides of the loading floor and below the loading floor. The built-in unit comprises a plurality of cross girders, which are welded via sockets to the web of the I-shaped main beams. The above-mentioned guide bearings for the driving tubes are attached on the respective cross girders. The driving tubes are consequently moved back and forth on a level located above the cross girder. Since the ends of the cylinders are hingeably attached to the end cross girder or bridge beam, which are located on the same level as the above-mentioned cross girders, here, too, the cylinders are inclined at an angle relative to the horizontal.

European patent application 0,158,398 discloses yet another embodiment of the loading floor of the type mentioned in the preamble. Herein, the driving feet are each hingeably connected to a piston rod, received with its one end with a piston attached thereto in a first cylinder and accommodated with its other end by means of a piston in a second cylinder. The first and second cylinders are hingeably attached with their other end to the side walls of cross beams of the loading floor, which are attached with their end edges to the side walls of main beams arranged on the sides of the loading space. Transversely spaced bearing girders are supported on the main beams, which bearing girders in their turn provide support for the slats connected to the driving feet.

Finally, European patent application 0,138,971 can be mentioned, which discloses a modular built-in unit for a driving apparatus for the loading floor mentioned in the preamble of claim 1, wherein the driving feet are attached on the upper side of associated double-acting cylinders, which cylinders are reciprocable on fixed piston rods, which are attached on their both ends to the bottom side of transversely extending bridge beams by means of clamping blocks, which bridge beams are welded with their ends to the bodies of two main beams of the chassis of a lorry by means of sockets. This relates to a stiff built-in unit, wherein the bridge beams are interconnected by means of longitudinal girders extending in longitudinal direction adjacent the driving assemblies, which longitudinal girders are stiffly connected to the bridge beams. The connection between the piston rods and the bridge beams and the connection between the reciprocable component of the driving assemblies, the cylinder, and the driving feet is also stiff, so that an easily manageable built-unit is obtained, which takes up little room and can realize sufficient power. An imperfection of this known apparatus, however, is that the distance between the line of action of the cylinder, which coincides with the centre line of the piston rod, is situated at a fairly large distance from the loading surface, constituted by the upper sides of the reciprocable slats.

For the sake of constructive simplicity, with a view to a reduced susceptibility to breakdowns, and/or to absorb greater forces, such as for instance in loads of clay in which great adhesive and cohesive forces can occur, it will be an object to obtain as stiff a driving apparatus as possible. Herein, the piston rod will preferably extend continuously from the associated piston to the location of the attachment on the driving foot or, as is for instance the case in European patent application 0,138,971, the bridge beam. The attachment of the stationary part of the driving assemblies, or alternatively the cylinder, will, in order to be attached sufficiently stiffly to the bridge beam, have to be secured to the bottom side thereof, namely at locations that are spaced from each other in longitudinal direction, which locations may or may not form a consecutive sequence.

This relatively low position of the stationary part of the driving assembly will cause a great distance to exist in vertical direction between the line of action of the piston rod and the loading surface. In a substantially stiff connection between the moving part of the driving assembly and the associated driving foot, considerable moments will then occur in the moving part of the driving assembly. This particularly has consequences for the relatively slender part of a driving assembly, namely the piston rod. That part must be made to be relatively strong and thereby heavy in order to absorb those moments, which leads to an increase of the section thereof, whereby the difference in surface on both sides of the pistons arranged on the ends of that piston rod is increased, and therein the active surface and the capacity of the driving assembly concerned will be relatively low in one direction.

It is especially for this reason that driving assemblies containing six cylinders are sometimes included in driving apparatuses for loading floors mentioned in the preamble. Hereby, the piston rod is both pushed and pulled during the movement back and forth, as a result of which the bending moments in the piston rod will not become to great and yet, notwithstanding a relatively small section of piston rod and cylinder, a sufficient force/power can be realized.

Although such a driving unit, wherein the cylinders are stiffly attached to bridge beams located on either side, has proven to be able to function satisfactorily, there is nevertheless a need for a driving apparatus which offers similar performance, but which is simpler, weighs less and is more economically manufactured. Important in this is the fact that the above-mentioned driving unit requires six cylinders with associated pressure lines, which renders the driving apparatus complex and therefore more susceptible to breakdowns or damage than is perhaps desirable.

It is therefore an object of the invention to improve upon this. For this purpose, the invention provides a loading floor for lorries or trailers, as described in claim 1.

The line of action of the driving assembly, coinciding with the centre line of the piston rod, herein comes to lie as close to the load-bearing surface of the slats as possible. The cylinders are herein accommodated in part within the cross profile of the first bridge beam.

Because the attaching means for the cylinders of the driving assemblies are located at least in part so high, the vertical distance between the loading support surface of the slats and the line of action or resultant force of the driving assemblies is reduced and thereby also the moment arm and thereby also the moment transferred onto the driving assembly at the location of the almost stiff angle between driving foot and the moving component of the driving assemblies. This moment reduction allows for a reduction in diameter of the moving component, in particular the piston rod. Consequently, the accessible ring area of the piston, that is to say the surface of the piston adjacent the location where the piston rod is attached to the piston, is increased at a similar external diameter as a result of which the force generated by the driving assemblies in the direction concerned is relatively increased. As a result, a greater force can be realized in that direction with a driving assembly having the same dimensions, as a consequence of which, in the case of a reciprocable piston rod, three of the six cylinders can be dispensed with. On the other hand, the diameter of the cylinder, for instance in the case of a reciprocable cylinder component, could be reduced, by which an iterating process with relation to the reduction of the above-mentioned vertical distance could be adopted, until a balance has been achieved.

It is remarked that an arrangement of a loading floor of the type mentioned in the preamble is known from European patent application 0,555,916, which arrangement also has a driving assembly which is situated at a high location, wherein the stationary cylinder, considered vertically, is located at the height of the bearing beams and the cylinder is attached to the bottom side of one of the reciprocable slats. The driving assemblies are here located far outside the space where the driving feet move back and forth. This is a different system, since the driving feet are moved because the back and forth movement of the cylinders is transferred via the slat, via the driving feet to the remaining slats of the group. The present invention, however, relates to arrangements in which the driving foot is situated substantially vertically above and is stiffly connected to the movable component itself of the driving assemblies and provides movement back and forth of all slats of a group. The invention therefore relates to a driving section which is compact not only in a vertical but also in a horizontal sense.

Preferably the first bridge beam has a substantially U-shaped or rectangular cross-section in a vertical plane, the bottom plate having an elevated course at the location of the attachment of the said ends of the driving assemblies to provide a recess for accommodation therein of at least a part of those ends.

In the outlined case, in the absence of the three cylinders on the other end of the piston rods, the piston rods or extensions thereof on that end are slidably supported in a second bridge beam, arranged substantially parallel to the first bridge beam. The function of this bridge beam, apart from supporting the slats, is almost exclusively one of guidance and this bridge beam does not have to transfer horizontal forces to the frame of the lorry or the trailer. This movable support can itself be realized in the manner as shown and described in one of the above-mentioned relevant patent applications or patent specifications.

The invention furthermore relates to a modular built-in unit as described in claim 8.

The invention will now be explained on the basis of an embodiment shown in the accompanying drawings. The following is shown in:
figure 1: a top view on a driving apparatus in the form of a modular built-in unit, suitable to be built into the loading floor according to the invention;
figures 2A and 2B: a side view and a front view, respectively, on the modular built-in unit of figure 1 in the direction of the arrows IIA and IIB;
figures 3A and 3B: a side view and a section, respectively, of a bridge beam of the built-in unit of figure 1;
figures 4A, 4B and 4C: a vertical front view, a bottom view in the direction of the arrow IVB and a section along arrow IVC, respectively, of the bridge beam of figures 3A and 3B, but with provisions for attachment of cylinders of the driving assemblies of the driving apparatus of figure 1;
figures 5A-5D: a top view, in part schematic, on a loading floor according to the invention, incorporating the driving apparatus of figure 1, a vertical side view on the loading floor of figure 5A, a view in the direction of arrow VC and a view in the direction of the arrow VD, respectively; and
figure 6: a vertical longitudinal section of a driving assembly in mounted condition in the loading floor of figures 5A-5D.

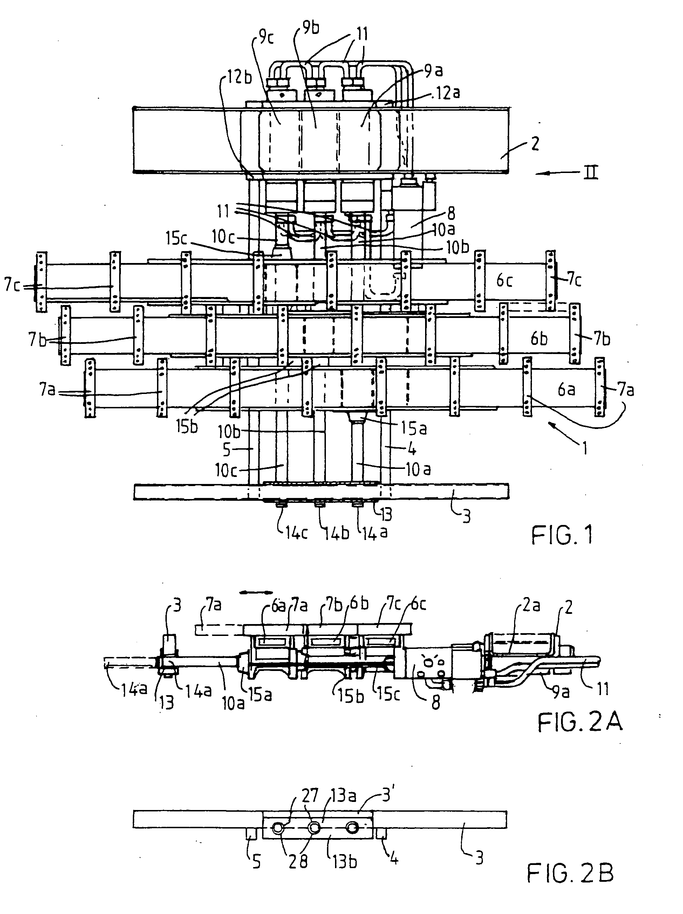

Figures 1 and 2A show the modular built-in unit 1 according to the invention. The built-in unit 1 comprises a first bridge beam 2, formed as a U-beam with a relatively wide bottom. On the other side a second bridge beam 3 is located, formed by a substantially square box profile. Transverse to the bridge beams 2 and 3, longitudinal beams 4 and 5 extend, which are also formed by square box profiles and are welded at their ends to the bottom side of the beams 2 and 3 to form a stiff frame with them. For reasons of clarity, longitudinal beam 4 has been left out in figure 2A.

Between both longitudinal beams 3 and 5 three driving assemblies arranged side by side extend, of which the cylinders 9a, 9b and 9c are stiffly attached to the first bridge beam 2 by means of clamping plates 12a and 12b and clamping plates 12c and 12d. The cylinders 9a, 9b and 9c are coupled to each other and to a reversing valve 8 by means of pressure lines 11, said reversing valve in its turn being connected to control and operating means, to achieve the correct fluid flows in the drive system.

Continuous piston rods 10a, 10b and 10c extend from the cylinders 9a, 9b and 9c, which piston rods are slidably borne to the second bridge beam 3 with their ends 14a, 14b and 14c. Figure 2B shows that the second bridge beam 3 is provided at that location with portion 3' of less height, against which two blocks 13a and 13b provided with semicylindrical recesses are attached. The facing recesses form passages 27, in which slide-bearing bushes 28 are attached.

The piston rods 10a, 10b and 10c are stiffly connected, by means of sockets and clamps 15a, 15b and 15c, in a manner shifted in longitudinal direction, to driving feet 6a, 6 b and 6c, respectively. These driving feet 6a, 6b and 6c are provided on their upper side with series of attaching feet 7a, 7b, 7c for the slats (not shown) of the loading floor, which attaching feet extend parallel to the piston rods. As can be seen, the attaching feet 7a, 7b and 7c are arranged alternately shifted in transverse direction, so that a slat floor can be built up of three groups, which groups are connected to the driving feet 6a, 6b and 6c, respectively.

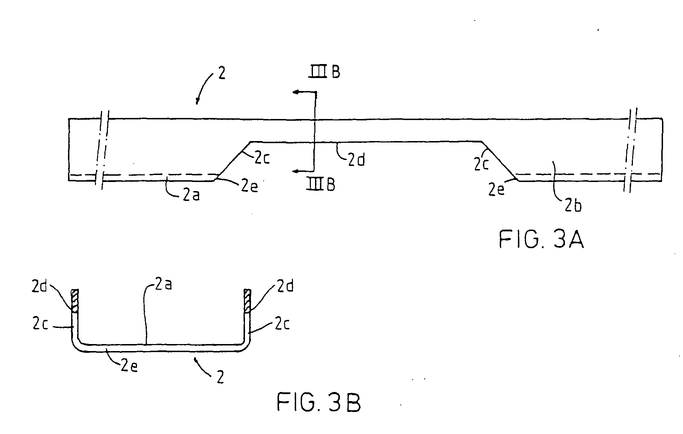

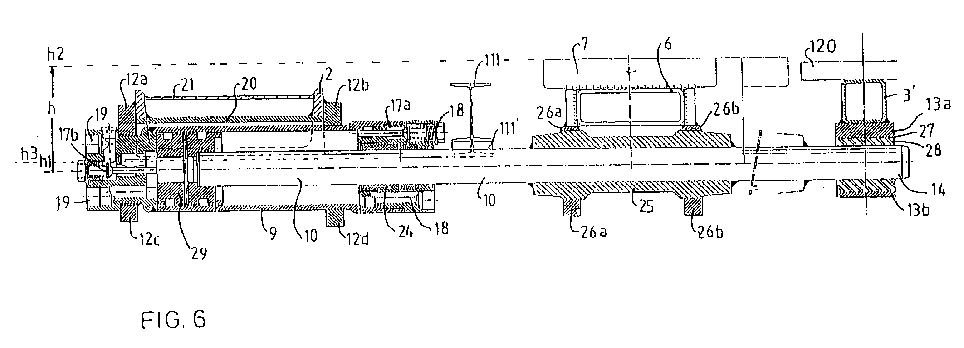

As can be seen in figure 2, and even more clearly in figure 6, the cylinders 9a-9c partly coincide with (or in other words fall within the body of) the first bridge beam 2. This bridge beam 2 is formed as shown in figures 3A and 3B. As already mentioned, a U-profile is concerned here, with upstanding side walls 2b and a bottom 2a. The bottom 2a is relatively wide, so as to provide a larger attaching width for attachment of the cylinders, and also to be able to provide a great resisting moment against moments in the horizontal plane. Before the U-profile is bent from a plate into its represented shape, a hexagonal part has been cut out of it. After the plate has been bent into the U-profile, a recess has been obtained in the bottom portion of the U-profile, which recess is bounded by the slanting sides 2c and the horizontal sides 2d and 2e.

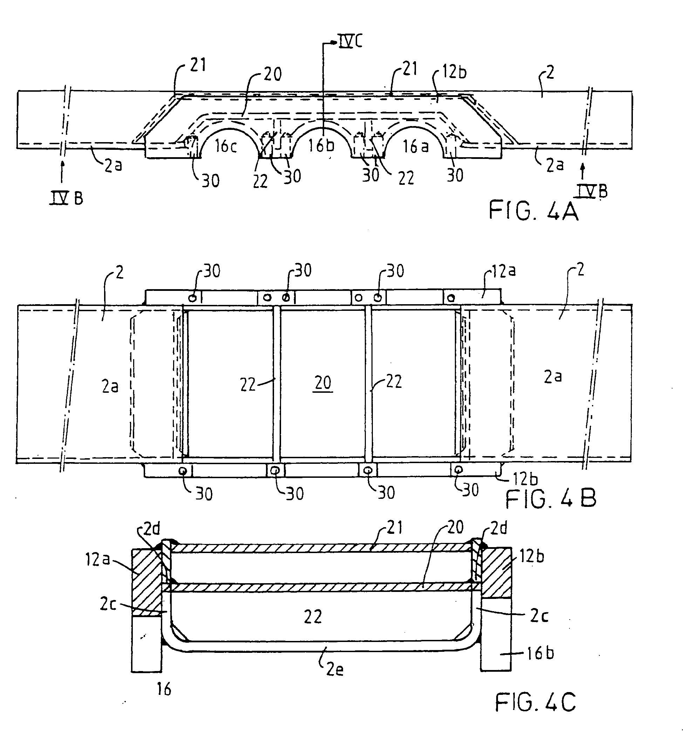

Subsequently, as shown in figures 4A, 4B and 4C, two plates 20 and 21 with downwardly sloping end areas are welded with the longitudinal edges to the upstanding walls 2b of the bridge beam 2, both along the horizontal portion of the plates 20 and 21 and the downwardly sloping end areas thereof. This compensates for a reduction of the resisting moment at the location of the cut-out part in the bottom 2a.

As can be seen in figures 4A-4C, two vertically downwardly extending strips 22 have been welded to the bottom side of the plate 20. Between and adjacent these strips three spaces are defined, in which the cylinders can at least in part be accommodated.

Subsequently, cylinder attaching strips 12a and 12b are welded onto the outer sides of the upstanding walls 2b of U-shaped bridge beam 2, said cylinder attaching strips each being provided with gates 16a, 16b and 16c for accommodation therein of parts of the cylinders, yet to be attached, of the drive system. The attaching plates 12a and 12b are each provided with bores 30, in which fastening bolts can be securely accommodated, to attach complementary attaching plates 12c and 12d, represented in for instance in figure 6, to clamp the cylinders against the respective attaching plates 12a and 12b and thus to as it were keep the cylinders restrained (encastré) on the bridge beam 2.

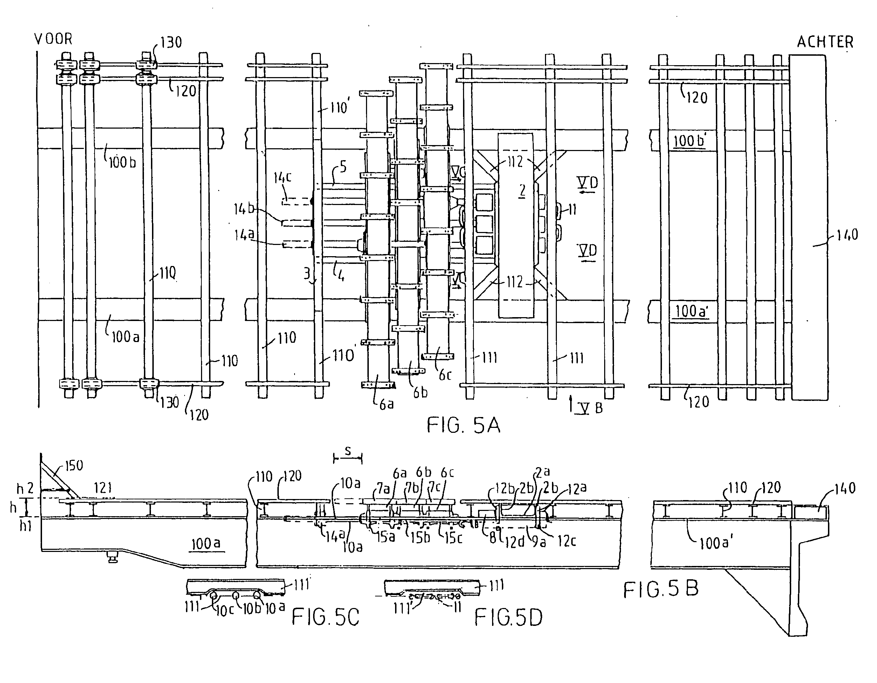

The modular driving unit 1 of figure 1 is suitable to be built into a lorry or trailer. For this, reference is made to figure 5A, in which two I-shaped main beams 100a and 100b can be seen, extending from the left, the front side, to the right, the rear side or unloading side.

As can also be seen in figure 5B, upon being built in, the modular driving unit 1 is simply placed with the ends of the bridge beams 2 and 3 on the top flanges 100a' and 100b' of the I-shaped main beams 100a and 100b. The U-shaped first bridge beam 2 is subsequently welded on the top flanges 100a', 100b'. The ends of the second bridge beam 3 are also placed on the flanges 100a' and 100b' and welded to them.

As can be seen in figures 5A and 5B, a plurality of cross beams or bearing beams are supported on the main beams 100a and 100b. These bearing beams 110, 111 are also realized as I-profiles and serve to transfer the load of the actual loading floor onto the main beams. Attached onto the bearing beams 110, 111, for instance by welding, are longitudinally extending tubes 120, of which only a few have been shown here. Plastic guides 130 are attached on these tubes 120, over which plastic guides the aluminium slats 121 (shown only in part), which form the actual loading floor, can be moved back and forth without causing too much frictional forces. These slats are, as previously remarked, attached in groups, via the attaching feet 7a, 7b and 7c, to the driving feet 6a, 6b and 6c. As can be seen in figure 5B, first the driving foot 6a can be moved to the left over a distance s, followed by, successively, the driving feet 6b and 6c. Subsequently, the three driving feet can jointly be moved to the left. With this known mechanism, cargo can be moved stepwise towards the unloading side, towards unloading threshold 140. By reversing that method, it is also possible for cargo to be loaded, the cargo being moved stepwise from the unloading threshold 140 to the bulk head 150.

During the movement back and forth the greatest force will have to be realized by a cylinder when it has to separately move the driving foot. According to a rule of thumb, this force should be twice as great as the force required during simultaneous movement of the piston rods. Because it is to be expected that cargo will more often be unloaded stepwise than loaded stepwise, the first bridge beam 2, to which the cylinders are attached, is located on the side of the driving feet closest to the unloading side. In that case, after all, the entire piston surface is available to be loaded with the pressure fluid during separate shifting of the piston rods towards the front side.

The connection of first bridge beam 2 to the main beams 100a and 100b is further stiffened by means of strip-shaped angle stiffeners 112 extending under 45°, almost in the horizontal plane, which angle stiffeners are welded on the one side to the bottom side of the bottom 2a and on the other side to the bottom side of the flanges 100a' and 100b'.

In the extension of the second bridge beam 3, welded to the ends thereof, two I-profiles 110' have been arranged, which are on the one side supported by the main beams 100a and 100b and on the other side on the side beams, not shown, of the lorry or trailer.

As can be seen in figures 5C and 5D, the bearing beams 111, placed on both sides of the first bridge beam 2, are somewhat different, because therein too, a recess has been realized on the bottom side, to leave room for the piston rods 10a, 10b and 10c and for the hydraulic lines 11 on the rear side of the cylinders, respectively.

As can be seen in figure 5B (and also in figure 6), the cylinders and the piston rods are located with an upper portion above the upper surface of the top flanges 100a' and 100b' of the main beams and within the vertical space defined by the cross beams or bearing beams 110. Herein, the distance h between the centre line or line of action hl of the driving assembly, constituted by piston rod and cylinders, and h2, the level of the supporting surface of the slats of the loading floor, is kept small. As was already discussed above, the moments in the piston rods caused by the movement of the slats can hereby be kept limited, as a result of which the piston rod itself can be manufactured more slender and a greater ring area is thereby obtained at the location of the piston, due to which the difference in surface between both sides of the piston is increased. Hereby, a greater force can be developed by the cylinder in the direction of the rear side, whereby also during consecutive movement of the driving feet when cargo is being loaded, sufficient forces can be generated. Due to all this, there is no need for an extra set of cylinders at the location of the second bridge beam. Hereby a weight saving of 20% is achieved for an identical performance, while moreover the driving unit is greatly simplified.

Figure 6 once again shows in detail the location of a driving assembly in the driving unit according to the invention. On the right-hand side the second bridge beam 3 is visible with portion 3' of reduced height, on the bottom side of which a block 13a has been welded, to which a block 13b is attached, while forming the passages 27, in which a slide bearing 28 is placed, to provide a kind of slide or roller bearing for the end of the piston rod 14.

More towards the left, a driving foot 6 is shown, on which attaching feet 7 for the slats has been welded. The driving foot 6 is in its turn welded onto two clamps 26a and 26b, to be clamped on a socket 25, which is welded to the piston rod 10. Owing to this, a stiff connection is obtained between driving foot 6 and piston rod 10. The clamps 26 clamp on the socket 25 by means of a roughened surface to transfer axial forces.

To the left-hand side of the socket 25, the bearing beam 111 shown in figure 5C can be seen, showing the recess 111', arranged to offer space to the piston rod for the relatively high position thereof.

To the left-hand side thereof, the cylinder 9 can be seen, which is stiffly attached in the manner as previously discussed to the first bridge beam 2 by means of attaching plates 12a and 12b, to which complementary attaching plates 12c and 12d have been bolted by means of threaded bolts.

The cylinder is further provided with transfer valves 17a and 17b and with various gates 18 and 19, to be double-acting and to be in communication with a fluid pressure source and the remaining cylinders, via pressure lines 11. This is known per se.

The piston rod 4 is guided in the cylinder 9 by piston rod guide 24 and is attached at its left-hand end to a piston 29.

Figure 6 further shows a horizontal line h3, representing the upper side of the main beams (not shown here). A portion of the section of the piston rod and a large portion of the cylinder are located above this level, due to the recesses in the various cross beams (bearing beams and bridge beams). The centre line h1 of the piston rod is therein located at only a small distance below the line h3. Hereby, the distance between level h2, that of the supporting surface of the slats, and the line of action h1 is minimal, resulting in the above-identified advantages. Moreover, the position of h1 near level h3 is advantageous in connection with transferring forces and horizontal bending moments onto the main beams.

## Claims

1. Loading floor for lorries or trailers, comprising two main beams (100a, 100b) extending in the longitudinal direction of the loading space and a plurality of bearing beams (110) supported by the main beams and extending in the transverse direction of the loading space, wherein the actual loading floor is formed by at least three groups of alternatingly arranged slats (121) forming a loading surface, said slats being supported by the bearing beams and being reciprocable back and forth over said bearing beams in longitudinal direction of the loading space, each group of slats being connected to a first side, preferably the upper side, of an associated driving foot (6a, 6b, 6c) or driving beam for back and forth movement thereby, the at least three driving feet extending in transverse direction and being arranged side by side in longitudinal direction and each extending above the movable component (10a, 10b, 10c) of an associated driving assembly formed by a cylinder/ piston/ piston rod assembly and each being connected on a second side, preferably their lower side, to said movable component for the back and forth movement of the slats, the driving assemblies having a stationary component (9a, 9b, 9c) which extends at least substantially parallel to the loading surface, the driving assemblies being rigidly attached at one end at said stationary components by means of attaching means (12a-d) to a first bridge beam (2) which extends substantially continuously in transverse direction, said first bridge beam being attached to said main beams, **characterized in that** said attaching means (12a-d) for the said ends of the driving assemblies are located at least in part within the vertical spaces defined by the bearing beams, wherein the cylinders (9a, 9b, 9c) of the driving assemblies are rigidly attached to the first bridge beam (2), wherein -viewed in a projection on a vertical plane extending parallel to the longitudinal direction of the loading space the cylinders (9a, 9b, 9c) coincide at least in part with the average section of the first bridge beam (2), and wherein the first bridge beam (2) is provided with a recess for accommodating at least a part of the cylinders (9a, 9b, 9c) of the driving assemblies and wherein the cylinders are vertically clamped against the first bridge beam.

2. Loading floor according to claim 1, wherein the first bridge beam (2) has a substantially U-shaped or rectangular cross-section in a vertical plane, said bridge beam having a bottom plate (2a) which has a portion (20) which is located at the location of the attachment of the said ends of the driving assemblies at a level higher than adjacent portions of said bottom plate to provide a recess for accommodation therein of at least a part of those ends.

3. Loading floor according to claim 1 or 2, wherein the piston rods (10a, 10b, 10c), from the piston to their attachment on the associated driving feet (6a, 6b, 6c), form a stiff entity transmitting bending moments.

4. Loading floor according to claim 1, 2 or 3, wherein the driving feet (6a, ab, 6c) are attached on the piston rods (10a, 10b, 10c) of the driving assemblies and the piston rods are slidably supported with their free end in a second bridge beam (3), arranged substantially parallel to the first bridge beam (2).

5. Loading floor according to any one of the preceding claims, wherein the first bridge beam (2) and, if present, a second bridge beam (3) are rigidly attached on the upper side of the main beams (100a, 100b), the centre lines of the piston rods (10a, 10b, 10c) being located, when considered from bottom to top, at least near the plane through the upper sides of the main beams, at the level of the plane or above it.

6. Loading floor according to claim 5, wherein the upper sides of the piston rods (10a, 10b, 10c) are located above the plane through the upper side of the main beams (100a, 100b).

7. Loading floor according to any one of the preceding claim, wherein the first bridge beam (2), the driving assemblies, a second bridge beam (3), the driving feet (6a, 6b, 6c) and two longitudinal girders (4, 5), rigidly connected to the bridge beams and forming a frame with them, form a modular built-in unit.

8. Modular built-in unit (1) for incorporation in a loading floor for lorries or trailers, as described in any one of the preceding claims, in an arrangement wherein said loading floor comprises two main beams (100a, 100b) extending in the longitudinal direction of the loading space and a plurality of bearing beams (110) supported by the main beams and extending in the transverse direction of the loading space, wherein the actual loading floor is formed by at least three groups of alternatingly arranged slats (121) forming a loading surface, said slats being supported by the bearing beams and being reciprocable back and forth over said bearing beams in longitudinal direction of the loading space, each group of slats being connected to a first side, preferably the upper side, of an associated driving foot (6a, 6b, 6c) or driving beam for back and forth movement thereby, the at least three driving feet extending in transverse direction and being arranged side by side in longitudinal direction and each extending above the movable component (10a, 10b, 10c) of an associated driving assembly formed by a cylinder/ piston/ piston rod assembly and each being connected on a second side, preferably their lower side, to said movable component for the back and forth movement of the slats, the driving assemblies having a stationary component (9a, 9b, 9c) which extends at least substantially parallel to the loading surface, the driving assemblies being rigidly attached at one end at said stationary components by means of attaching means (12a-d) to a first bridge beam (2) which extends substantially continuously in transverse direction, said first bridge beam being attached to said main beams, **characterized in that** the cylinders (9a, 9b, 9c) of the driving assemblies are rigidly attached to the first bridge beam (2), wherein -viewed in a projection on a vertical plane extending parallel to the longitudinal direction of the loading space- the cylinders (9a, 9b, 9c) coincide at least in part with the average section of the first bridge beam (2), and wherein the first bridge beam (2) is provided with a recess for accommodating at least a part of the cylinders (9a, 9b, 9c) of the driving assemblies, wherein the driving feet (6a, ab, 6c) are attached on the piston rods (10a, 10b, 10c) of the driving assemblies and the piston rods are slidably supported with their free end in a second bridge beam (3), arranged substantially parallel to the first bridge beam (2), wherein the first bridge beam (2), the driving assemblies, a second bridge beam (3), the driving feet (6a, 6b, 6c) and two longitudinal girders (4, 5), rigidly connected to the bridge beams and forming a frame with them, form said modular built-in unit, and wherein the cylinders are vertically clamped against the first bridge beam.

## Patentansprüche

1. Ladefläche für Lastkraftwagen oder Trailer, die zwei sich in Längsrichtung des Laderaums erstreckende Hauptträger (100a, 100b) und eine Anzahl von den Hauptträgern unterstützte und sich in Querrichtung des Laderaums erstreckende Stützträger (110) aufweist, worin die eigentliche Ladefläche aus mindestens drei Gruppen abwechselnd angeordnete, eine Ladeoberfläche bildende Platten (121) gebildet ist, welche Platten von den Stützträgern unterstützt werden und in Längsrichtung des Laderaums hin- und hergehend über die Stützträger beweglich sind, wobei jede Plattengruppe mit einer ersten Seite, vorzugsweise der Oberseite, von einem zugehörigen Antriebsfuß (6a, 6b, 6c) oder Antriebsträger für die Hin- und Herbewegung verbunden ist, wobei die mindestens drei Antriebsfüße sich in Querrichtung erstrecken und in Längsrichtung Seite an Seite angeordnet sind und jeder sich über die bewegliche Komponente (10a, 10b, 10c) eines zugeordneten, von einem Zylinder/Kolben/Kolbenstangensystem gebildeten Antriebssystem erstreckt, und jeder an einer zweiten Seite, vorzugsweise ihrer Unterseite, mit der beweglichen Komponente für die Hin- und Herbewegung der Platten verbunden ist, wobei die Antriebssysteme eine stationäre Komponente (9a, 9b, 9c) haben, die sich wenigstens nahezu parallel an Ladeoberfläche erstreckt, wobei die Antriebssysteme an einer Ende der stationären Komponenten durch Befestigungsmittel (12a-d) an einem sich wesentlich andauerend in Querrichtung erstreckenden ersten Querträger (2) steif befestigt sind, welcher erste Querträger an den Hauptträgern befestigt ist, **dadurch gekennzeichnet, daß** die Befestigungsmittel (12a-d) für die Enden des Antriebssystems mindestens teilweise innerhalb den von den Stützträgern bestimmten Vertikalräumen angeordnet sind, wobei die Zylinder (9a, 9b, 9c) der Antriebssysteme steif am ersten Querträger (2) befestigt sind, wobei - in vertikaler Projektionsebene parallel zu der Längsrichtung des Laderaums betrachtet - die Zylinder (9a, 9b, 9c) wenigstens teilweise mit dem Mittlerabschnitt des ersten Querträgers (2) koinzidieren und wobei der erste Querträger (2) eine Aussparung zur Aufnahme von wenigstens einem Teil der Zylinder (9a, 9b, 9c) der Antriebssysteme aufweist, und wobei die Zylinder vertikal gegen den ersten Querträger geklemmt sind.

2. Ladefläche gemäß Anspruch 1, wobei der erste Querträger (2) in Vertikalebene einen wesentlich U-geformten oder einen rechtwinkeligen Querschnitt in Vertikalebene aufweist, wobei der Querträger eine Bodenplatte (2a) hat, mit einem Abschnitt (20) der in dem Bereich der Befestigungslage von den Enden der Antriebssysteme auf einem hoheren Niveau als die angrenzenden Abschnitte der Bodenplatte angeordnet ist um eine Aussparung zur Aufnahme von wenigstens einem Teil dieser Enden zu verschaffen.

3. Ladefläche gemäß Anspruch 1 oder 2, wobei die Kolbenstangen (10a, 10b, 10c) vom Kolben bis ihre Befestigung auf den zugehörigen Antriebsfüßen (6a, 6b, 6c) eine steife Entität formen, die Biegenmomente überträgt.

4. Ladefläche gemäß Anspruch 1, 2 oder 3, wobei die Antriebsfüße (6a, 6b, 6c) an den Kolbenstangen (10a, 10b, 10c) der Antriebssysteme befestigt sind und die Kolbenstangen verschiebbar mit ihrem freien Ende in einem zweiten Querträger (3) unterstützt werden, welcher zweite Querträger im wesentlichen parallel zum ersten Querträger (2) angeordnet ist.

5. Ladefläche gemäß einem der vorhergehenden Ansprüche wobei der erste Querträger (2) und, wenn anwesend, ein zweiter Querträger (3) steif an der Oberseite der Hauptträger (100a, 100b) befestigt sind, wobei die Mittellinien der Kolbenstangen (10a, 10b, 10c), wenn von unten nach oben betrachtet, mindestens in der Nähe der Ebene durch die Oberseiten der Hauptträger, auf dem Niveau der Ebene oder daoben, angeordnet sind.

6. Ladefläche gemäß Anspruch 5, wobei die Oberseiten der Kolbenstangen (10a, 10b, 10c) oben der Ebene durch die Oberseite der Hauptträger (100a, 100b) angeordnet sind.

7. Ladefläche gemäß einem der vorhergehenden Ansprüche, wobei der erste Querträger (2), die Antriebssysteme, ein zweiter Querträger (3), die Antriebsfüße (6a, 6b, 6c) und zwei längsgerichtete Träger (4, 5) die steif an den Querträgern befestigt sind und damit einen Rahmen formen, eine modulare Einbaueinheit bilden.

8. Modulare Einbaueinheit (1) für Aufnahme in eine Ladefläche für Lastkraftwagen oder Trailer, wie in einem der vorhergehenden Ansprüchen beschrieben, in einer Anordnung wobei genannte Ladefläche zwei sich in Längsrichtung des Laderaums erstreckende Hauptträger (100a, 100b) und eine Anzahl von den Hauptträgern unterstützte und sich in Querrichtung des Laderaums erstreckende Stützträger (110) aufweist, wobei die eigentliche Ladefläche aus mindestens drei Gruppen abwechselnd angeordnete einen Ladeoberfläch bildende Platten (121) gebildet ist, welche Platten von den Stützträgern unterstützt werden und über die Stützträger in Längsrichtung des Laderaums hin- und hergehend beweglich sind, wobei jede Plattengruppe an einer ersten Seite, vorzugsweise der Oberseite, von einem zugehörigen Antriebsfuß (6a, 6b, 6c) oder Antriebsträger für die Hin- und Herbewegung verbunden ist, wobei die mindestens drei Antriebsfüße sich in Querrichtung erstrecken und in Längsrichtung Seite an Seite angeordnet sind und jeder sich über die bewegliche Komponente (10a, 10b, 10c) eines zugeordneten, von einem Zylinder/Kolben/Kolbenstangensystem gebildeten Antriebssystem erstreckt, und jeder an einer zweiten Seite, vorzugsweise ihrer Unterseite, mit der beweglichen Komponente für die Hin- und Herbewegung der Platten verbunden ist, wobei die Antriebssysteme eine stationäre Komponente (9a, 9b, 9c) haben, die sich wenigstens nahezu parallel an Ladeoberfläche erstreckt, die Antriebssysteme sind steif an einer Seite von genannten stationären Komponenten durch Befestigungsmittel (12a-d) an einen sich wesentlich andauerend in Querrichtung erstreckenden ersten Querträger (2) befestigt, genannten ersten Querträger ist an genannten Hauptträger befestigt, **dadurch gekennzeichnet, daß** die Zylinder (9a, 9b, 9c) der Antriebssysteme steif am ersten Querträger (2) befestigt sind, wobei - in vertikaler Projektionsebene parallel zu der Längsrichtung des Laderaums betrachtet - die Zylinder (9a, 9b, 9c) wenigstens teilweise mit dem Mittlerabschnitt des ersten Querträgers (2) koinzidieren und wobei der erste Querträger (2) eine Aussparung zur Aufnahme von wenigstens einem Teil der Zylinder (9a, 9b, 9c) der Antriebssysteme aufweist, wobei die Antriebsfüße (6a, 6b, 6c) an den Kolbenstangen (10a, 10b, 10c) der Antriebssysteme befestigt sind und die Kolbenstangen verschiebbar mit ihrem freien Ende in einem zweiten Querträger (3) unterstützt werden, welcher zweite Querträger im wesentlichen parallel zum ersten Querträger (2) angeordnet ist, wobei der erste Querträger (2), die Antriebssysteme, der zweiter Querträger (3), die Antriebsfüße (6a, 6b, 6c) und zwei längsgerichtete Träger (4, 5) die steif an den Querträgern befestigt sind und damit einen Rahmen formen, eine modulare Einbaueinheit bilden, und wobei die Zylinder vertikal gegen den ersten Querträger geklemmt sind.

## Revendications

1. Plateforme de chargement pour camions ou remorques, comprenant deux longerons principaux (100a, 100b), s'étendant dans la direction longitudinale de l'espace de chargement, et une pluralité de poutres d'appui (110), supportées par les longerons principeaux et s'étendant dans la direction transversale de l'espace de chargement, dans laquelle la plateforme de chargement proprement dite est formée par au moins trois groupes de lattes (121), disposées en alternance, formant une surface de chargement, ces lattes étant supportées par les poutres d'appui et pouvant effectuer un mouvement vers l'arrière et vers l'avant, sur ces poutres d'appui, dans la direction longitudinale de l'espace de chargement, chaque groupe de lattes étant relié à un premier côté, de préférence le côté supérieur, d'un pied d'entraînement (6a, 6b, 6c) associé ou d'une poutre d'entraînement associé, permettant d'obtenir ainsi un mouvement vers l'arrière et vers l'avant, les pieds d'entraînement, au nombre minimum de trois, s'étendant dans la direction transversale et étant disposés côte à côte dans la direction longitudinale et s'étendant, chacun, au-dessus du composant mobile (10a, 10b, 10c) d'un ensemble d'entraînement associé constitué par un ensemble formant cylindre/piston/tige de piston et chacun étant relié sur un deuxième côté, de préférence leur côté inférieur, au composant mobile pour le mouvement vers l'arrière et vers l'avant des lattes, les ensembles d'entraînement comportant un composant stationnaire (9a, 9b, 9c) qui s'étend au moins de façon sensiblement parallèle à la surface de chargement, les ensembles d'entraînement étant fixés de façon sensiblement parallèle à la surface de chargement, les ensembles d'entraînement étant fixés de façon rigide, à une extrémité des composants stationnaires, par l'intermédiaire de moyens de fixation (12 a-d), à une première poutre formant pont (2) qui s'étend de façon sensiblement continue dans la direction transversale, cette poutre formant pont étant fixée aux longerons principaux, **caractérisée en ce que** les moyens de fixation (12 a-d) destinés aux extrémités des ensembles d'entraînement sont situés, au moins en partie, à l'intérieur des espaces verticaux définis par les poutres d'appui, les cylindres (9a, 9b, 9c) des ensembles déntraînement étant fixés de façon rigide à la première poutre formant pont (2), les cylindres (9a, 9b, 9c) - vus selon une projection, sur un plan vertical, parallèle à la direction longitudinale de l'espace de chargement - coïncidant au moins en partie avec la section moyenne de la première poutre formant pont (2), et la première poutre formant pont (2), présentant un évidement destiné à loger au moins une partie des cylindres (9a, 9b, 9c) des ensembles d'entraînement, les cylindres étant verticalement serré contre la première poutre formant pont.

2. Plateforme de chargement selon la revendication 1, dans laquelle la première poutre formant pont (2) présente une section transversale sensiblement en forme de U ou rectangulaire, dans un plan vertical, cette poutre formant pont présentant une plaque de fond (2a) dont une portion (20) est située au point de fixation des extrémités des ensembles d'entraînement, à un niveau supérieur à celui des portions adjacentes de la plaque de fond, afin de constituer un évidement pour loger au moins une partie de ces extrémités.

3. Plateforme de chargement selon la revendication 1 ou 2, dans laquelle les tiges de piston (10a, 10b, 10c), du piston à leur point de fixation sur les pieds d'entraînement associés (6a, 6b, 6c), constituent une entité rigide transmettant les couples de flexion.

4. Plateforme de chargement selon la revendication 1, 2 ou 3, dans laquelle les pieds d'entraînement (6a, 6b, 6c) sont fixés sur les tiges de piston (10a, 10b, 10c) des ensembles d'entraînement et les tiges de piston sont supportés de façon coulissante aves leur extrémité libre dans une deuxième poutre formant pont (3), placée de façon sensiblement parallèle à la première poutre formant pont (2).

5. Plateforme de chargement selon l'une quelconque des revendications précédentes, dans laquelle la première poutre formant pont (2) et, si elle est présente, une deuxième poutre formant pont (3), sont fixées de façon rigide sur le côté supérieur des longerons principaux (100a, 100b), les lignes médianes des tiges de piston étant situées, si l'on regarde du bas vers le haut, au moins à proximité du plan traversant les côtés supérieurs des longerons principaux, au niveau du plan, ou au-dessus de celui-ci.

6. Plateforme de chargement selon la revendication 5, dans laquelle les côtés supérieurs des tiges de piston (10a, 10b, 10c) sont situés au-dessus du plan traversant le côté supérieur des longerons principaux (100a, 100b).

7. Plateforme de chargement selon l'une quelconque des revendications précédentes, dans laquelle la première poutre formant pont (2), les ensembles d'entraînement, une deuxième poutre formant pont (3), les pieds d'entraînement (6a, 6b, 6c) et deux poutrelles longitudinales (4, 5), reliées de façon rigide aux poutres formant ponts et formant un cadre avec celles-ci, forment une unité modulaire intégrée.

8. Unité modulaire intégrée (1) destinée à être incorporée à une plateforme de chargement pour camions ou remorques, telle que décrite dans l'une quelconque des revendications précédentes, dans un agencement selon lequel la plateforme de chargement pour camions ou remorques comprend deux longerons principaux (100a, 100b), s'étendant dans la direction longitudinale de l'espace de chargement, et une pluralité de poutres d'appui (110), supportées par les longerons principaux et s'étendant dans la direction transverale de l'espace de chargement, dans laquelle la plateforme de chargement proprement dite est formée par au moins trois groupes de lattes (121), disposées en alternance, formant une surface de chargement, ces lattes étant supportées par les poutres d'appui et pouvant effectuer un mouvement ver l'arrière et vers l'avant, sur ces poutres d'appui, dans la direction longitudinale de l'espace de chargement, chaque groupe de lattes étant relié à un premier côté, de préférence le côté supérieur, d'un pied d'entraînement (6a, 6b, 6c) associé ou d'une poutre d'entraînement associé, permettant d'obentir ainsi un mouvement vers l'arrière et vers l'avant, les pieds d'entraînement, au nombre minimum de trois, s'étendant dans la direction transversale et étant disposés côte à côte dans la direction longitudinale et s'étendant, chacun, au-dessus du composant mobile (10a, 10b, 10c) d'un ensemble d'entraînement associé constitué par un ensemble formant cylindre/piston/tige de piston, et chacun étant relié sur un deuxième côté, de préférence leur côté inférieur, au composant mobile pour le mouvement vers l'arrière et vers l'avant des lattes, les ensembles d'entraînement comportant un composant stationnaire (9a, 9b, 9c) qui s'étend au moins de façon sensiblement parallèle à la surface de chargement, les ensembles d'entraînement étant fixés de façon rigide, à une extémité des composants stationnaires, par l'intermédiaire de moyens de fixation (12 a-d), à une première poutre formant pont (2) qui s'étend de façon sensiblement continue dans la direction tranversale, cette poutre formant pont étant fixée aux longerons principaux, **caractérisée en ce que** les cylindres (9a, 9b, 9c) des ensembles d'entraînement sont rigidement fixés sur la première poutre formant pont (2), les cylindres (9a, 9b, 9c) - vus selon une projection, sur un plan vertical, parallèle à la direction longitudinale de l'espace de chargement - coïncidant au moins en partie avec la section moyenne de la première poutre formant pont (2), et la première poutre formant pont (2) présentant un évidement destiné à loger au moins une partie des cylindres (9a, 9b, 9c) des ensembles d'entraînemant, les pieds d'entraînement (6a, 6b, 6c) étant fixés sur les tiges de piston (10a, 10b, 10c) des ensembles d'entraînement et les tiges de piston étant supportées de façon coulissante, leur extrémité libre se trouvant dans une deuxième poutre formant pont (3), placée de façon sensiblement parallèle à la première poutre formant pont (2), la première poutre formant pont (2), les ensembles d'entraînement, la deuxième poutre formant pont (3), les pieds d'entraînement (6a, 6b, 6c) et deux poutrelles longitudinales (4, 5) reliées de façon rigide aux poutres formant ponts et formant un cadre avec celles-ci, formant l'unité modulaire intégrée, les cylindres étant verticalement serré contre la première poutre formant pont.
